# EUROPÄISCHE PATENTANMELDUNG

(11) **EP 1 307 049 A2**
(43) Veröffentlichungstag der Anmeldung: **02.05.2003**
(21) Anmeldenummer: 02023432.4
(22) Anmeldetag: 19.10.2002
(51) Int. Cl.: H04N 7/088

(54) **Fernsehempfänger mit VPS-Datengenerator**

(30) Priorität: 27.10.2001 DE 10153186
(71) Anmelder: GRUNDIG Aktiengesellschaft, 90471 Nürnberg (DE)
(72) Erfinder: Kamm, Jürgen, 90579 Langenzenn (DE)

(57) **Zusammenfassung**

Die Erfindung betrifft einen digitalen Fernsehsignalempfänger. Dieser weist einen Programmvorschausignalseparator auf. An dessen Ausgang ist ein Datengenerator angeschlossen, welcher zur Generierung eines einem gewünschten Fernsehprogrammbeitrag zugehörigen Datensatzes dient. Dieser enthält zumindest Informationen über die Anfangs- und die Endzeit einer gewünschten Sendung. Der genannte Datensatz wird in einer Einfügschaltung in das dem gewünschten Fernsehbeitrag entsprechende analoge Fernsehsignal eingefügt, welches durch eine Digital-Analog-Wandlung aus dem zugehörigen digitalen Fernsehsignal abgeleitet wurde.

## Beschreibung

Die Erfindung betrifft einen Fernsehempfänger für Fernsehsignale, die in Form eines digitalen Datenstromes übertragen werden, in welchem digitale Fernsehsignale und digitale Programmvorschausignale enthalten sind.

Bei einer Übertragung analoger Fernsehsignale ist es bekannt, in die vertikalen Austastlücken der Fernsehsignale Video-Programm-System-Daten (VPS-Daten) einzusetzen. Diese VPS-Daten werden zeitgleich mit einer jeweils zugehörigen Fernsehsendung übertragen und enthalten unter anderem eine Information über die Anfangszeit der Fernsehsendung. Im Falle einer vorprogrammierten Videorecorderaufzeichnung wurde vom Benutzer bei der Programmierung des Recorders unter anderem ebenfalls die Anfangszeit der Fernsehsendung eingegeben. Durch Vergleich der in den VPS-Daten des übertragenen Fernsehsignals enthaltenen Anfangszeit mit der vorprogrammierten Anfangszeit kann der Aufzeichnungsvorgang auch dann zeitgerecht gestartet werden, wenn sich der tatsächliche Sendungsbeginn aus aktuellem Anlass zeitlich verschiebt.

Bei einer Übertragung digitaler Fernsehsignale über Satellit, Kabel oder terrestrisch werden oftmals keine VPS-Daten übertragen, so dass empfangsseitig in vielen Fällen keine VPS-Daten zu einem zeitgerechten Start einer Videoaufzeichnung zur Verfügung stehen.

Der Erfindung liegt die Aufgabe zugrunde, einen Weg aufzuzeigen, wie auch bei einer Übertragung digitaler Fernsehsignale ein zeitgerechtes Starten eines Videorecorders sichergestellt werden kann.

Diese Aufgabe wird durch einen Empfänger mit den im Anspruch 1 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass durch die beanspruchte empfangsseitige Generierung eines einem gewünschten Fernsehprogrammbeitrag zugehörigen Datensatzes, welcher zumindest Informationen über die Anfangszeit des Fernsehprogrammbeitrages enthält, und das Einsetzen dieses Datensatzes in das Fernsehsignal sichergestellt wird, dass einem Videorecorder, mittels dessen der Fernsehprogrammbeitrag aufgezeichnet werden soll, die genannte Anfangszeit zur Verfügung gestellt wird, um einen zeitgerechten Aufzeichnungsstart zu ermöglichen. Unter Videorecorder im Sinne der Erfindung wird dabei nicht nur ein eigenständiges Aufzeichnungsgerät mit einem Magnetband oder einem plattenförmigen Aufzeichnungsträger verstanden, sondern auch ein in ein Fernsehgerät oder einen Satellitenempfänger, beispielsweise eine Settop-Box, eingesetzter Festplattenspeicher.

Der beanspruchte Programmvorschausignalseparator, der Datengenerator und die Einfügeinheit sind vorzugsweise Bestandteil einer Settop-Box oder einer Kabelkopfstation, wo eine Umsetzung des empfangenen digitalen Fernsehsignals in ein analoges Fernsehsignal erfolgt.

Der Gegenstand der Erfindung kann unabhängig vom konkreten Vorliegen eines Aufzeichnungswunsches für alle Programmbeiträge eines Senders, der keine VPS-Daten ausstrahlt, angewendet werden.

Alternativ dazu kann die beanspruchte Separation von Programmvorschausignalen, die Generation des einem gewünschten Fernsehprogrammbeitrag zugehörigen Datensatzes und dessen Einfügen in das Fernsehsignal aber auch erst beim konkreten Vorliegen eines Aufzeichnungswunsches erfolgen, d. h. nach erfolgter Programmierung des Videorecorders.

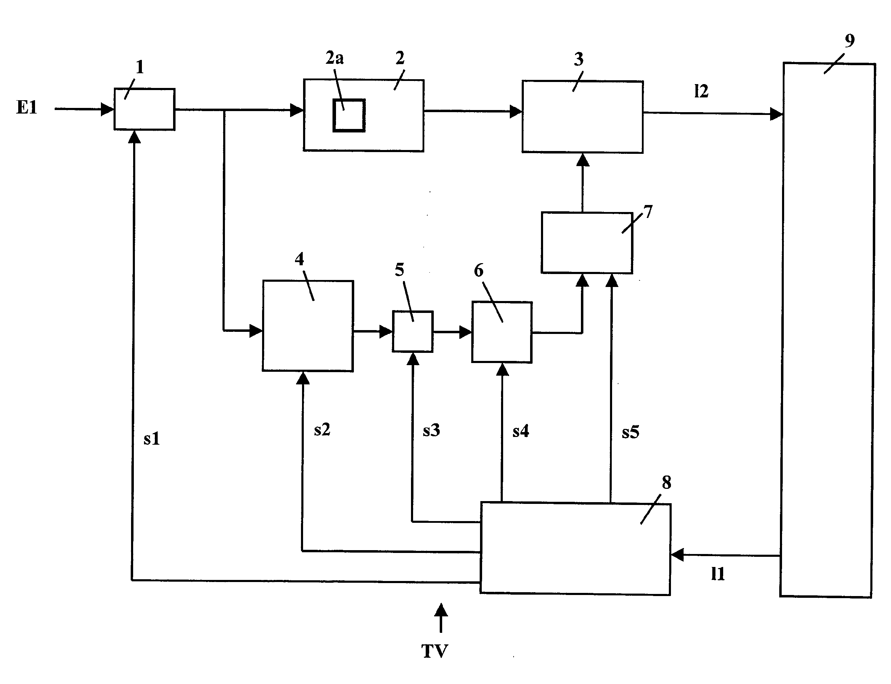

Weitere vorteilhafte Eigenschaften der Erfindung ergeben sich aus deren nachfolgenden Erläuterung anhand eines in der Figur gezeigten Ausführungsbeispiels.

Dieses zeigt ein Blockschaltbild eines Fernsehempfängers mit den zum Verständnis der Erfindung notwendigen Baugruppen. Der dargestellte Empfänger ist zum Empfang von digital übertragenen Fernsehsignalen vorgesehen. Diese liegen am Eingang E1 in Form eines digitalen Datenstromes vor.

Der digitale Datenstrom enthält im Zeitmultiplex Datenpakete, die mehreren digitalen Fernsehprogrammbeiträgen entsprechen, und Datenpakete, die digitalen Serviceinformationen entsprechen. In den digitalen Serviceinformationen sind unter anderem Programmvorschausignale für eine Vielzahl verschiedener Fernsehsender enthalten. Diese Programmvorschausignale entsprechen einer elektronischen Programmzeitung, welche unabhängig davon, ob ein Sender VPS-Signale überträgt oder nicht, Programmdaten zu jedem Fernsehprogrammbeitrag beinhaltet, die unter anderem Informationen über die Anfangszeit jedes Programmbeitrags enthalten.

Soll mittels eines Videorecorders 9 ein gewünschter Fernsehprogrammbeitrag aufgezeichnet werden, dann erfolgt in bekannter Weise eine Aufzeichnungsprogrammierung des Videorecorders, bei welcher die Anfangszeit des Programmbeitrages, dessen Endzeit und Informationen zur Spezifizierung des Programmbeitrags eingegeben werden. Diese Informationen werden vom Videorecorder 9 über die Leitung l1 dem Mikrocontroller 8 des Fernsehempfängers TV zugeführt.

Der Mikrocontroller 8 schaltet daraufhin über die Steuerleitung s1 die Empfangsstufe 1 auf einen Empfangskanal um, in welchem Serviceinformationen übertragen werden, die digitale Programmvorschausignale für eine Vielzahl von Fernsehsendern enthalten. Zu diesen Fernsehsendern gehört auch derjenige Fernsehsender, der den gewünschten Fernsehprogrammbeitrag ausstrahlt, welcher mittels des Videorecorders aufgezeichnet werden soll.

Die Ausgangssignale der Empfangsstufe 1 werden einem Programmvorschausignalseparator 4 zugeführt, welcher über eine Steuerleitung s2 vom Mikrocontroller 5 angesteuert wird. Im Programmvorschausignalseparator 4 werden mittels eines ersten Filters aus den Serviceinformationen alle Programmvorschausignale und aus diesen mittels eines zweiten Filters die den gewünschten Femsehprogrammbeitrag zugehörigen Sendungsdaten separiert. Zu diesen Sendungsdaten gehören zumindest die Anfangszeit des Programmbeitrags und eine Information über die Dauer der Sendung. Letztere kann in Form der Endzeit der Sendung, einer Information über die Dauer der Sendung oder in einem sendungsspezifischen Label vorliegen, welches während der gesamten Dauer der Sendung übertragen und am Ende der Sendung durch einen der Nachfolgesendung zugehörigen Label ersetzt wird.

Diese Sendungsdaten werden in Form eines Datensatzes am Ausgang des Programmvorschausignalseparators 4 zur Verfügung gestellt und können bei Bedarf in einem Speicher 5 zwischengespeichert werden. Der Speicher 5 wird über eine Steuerleitung s3 vom Mikrocontroller 8 angesteuert.

Die gegebenenfalls zwischengespeicherten Ausgangssignale des Programmvorschausignalseparators 4 werden an einen Datengenerator 6 geführt. In diesem Datengenerator, der über eine Steuerleitung s4 vom Mikrocontroller 8 angesteuert wird, wird aus den Ausgangssignalen des Programmvorschausignalseparators 4 ein dem gewünschten Fernsehprogrammbeitrag zugehöriger Datensatz generiert. Dieser liegt vorzugsweise in einem Datenformat vor, das mit dem Datenformat herkömmlicher VPS-Signale übereinstimmt.

Die Ausgangssignale des Datengenerators 6 werden in einem Speicher 7 zwischengespeichert, welcher über die Steuerleitung s5 vom Mikrocontroller 8 gesteuert wird.

Ist die Anfangszeit des gewünschten Fernsehprogrammbeitrages erreicht, dann schaltet der Mikrocontroller 8 über die Steuerleitung s1 die Empfangsstufe 1 auf den Kanal um bzw. ein, in welchem der gewünschte Fernsehprogrammbeitrag übertragen wird. Dieser Kanal kann von demjenigen Kanal, über welchen die Programmvorschausignale übertragen werden, verschieden sein.

Die Ausgangssignale der Empfangsstufe 1 werden einer Bildsignalverarbeitungseinheit 2 zugeführt. Diese weist unter anderem einen Fernsehprogrammbeitragsseparator 2a auf, welcher aus dem am Ausgang der Empfangsstufe 1 vorliegenden Signalmultiplex die dem gewünschten Fernsehprogrammbeitrag zugehörigen Datenpakete separiert. Weiterhin enthält die Bildsignalverarbeitungseinheit 2 einen Digital-Analog-Wandler, der den in digitaler Form vorliegenden Fernsehprogrammbeitrag in ein analoges Fernsehsignal umsetzt. Dieses wird am Ausgang der Bildsignalverarbeitungseinheit 2 zur Verfügung gestellt und von dort aus einer Einfügeinheit 3 zugeführt.

In dieser Einfügeinheit 3 erfolgt ein Einfügen des im Speicher 7 zwischengespeicherten Datensatzes, welcher zumindest Informationen über die Anfangs- und die Endzeit des Fernsehprogrammbeitrags enthält, in die vertikalen Austastlücken des analogen Fernsehsignals. Das Ausgangssignal der Einfügeinheit 3 wird über die Leitung 12 dem Videorecorder 9 zugeführt, welcher den genannten Datensatz zu einer zeitgerechten Aufzeichnung des Fernsehprogrammbeitrages auswertet.

Beim vorstehend beschriebenen Ausführungsbeispiel wurde angenommen, dass der Empfänger TV ein Fernsehgerät ist, welches über die Leitungen 11 und 12 mit einem eigenständigen Videorecorder 9 verbunden ist. Es ist aber ebenso möglich, dass der dargestellte Videorecorder integrierter Bestandteil des Fernsehgerätes ist. Bei dem Videorecorder kann es sich um einen Videorecorder mit einem Magnetband als Aufzeichnungsträger, mit einem plattenförmigen Aufzeichnungsträger oder einen in das Fernsehgerät integrierten Festplattenspeicher handeln.

Gemäß einer alternativen Ausführungsform handelt es sich beim beanspruchten Fernsehempfänger um eine einem Fernsehgerät vorgeschaltete Settop-Box, die von der Außeneinheit einer Satellitenempfangsanlage digitale Fernsehsignale empfängt und in analoge Fernsehsignale umsetzt, die einem Fernsehgerät zugeführt werden.

Gemäß einer weiteren Ausführungsform der Erfindung handelt es sich beim beanspruchten Fernsehempfänger um eine Kabelkopfstation, in welcher im Sinne eines Gemeinschaftsempfangs eine Vielzahl von digitalen Fernsehsignalen empfangen und in herkömmliche analoge Fernsehsignale umgesetzt werden, die jeweils in einem UHF- oder VHF-Kanal über ein Übertragungskabel an einzelne Haushalte verteilt werden.

Insbesondere bei der letztgenannten Ausführungsform ist es vorteilhaft, die oben beschriebene Generierung von fernsehprogrammspezifischen Datensätzen, die vorzugsweise dem VPS-Standard entsprechen, unabhängig vom Vorliegen konkreter Aufzeichnungswünsche für alle über das Kabel übertragenen Sendungen vorzunehmen, sofern diese nicht bereits senderseitig mit VPS-Signalen ausgestattet sind. Der Vorteil dieser Lösung besteht insbesondere darin, dass von den Videorecordern in den einzelnen Haushalten keine Informationen über einzelne Programmwünsche zur Kabelkopfstation übertragen werden müssen.

In einer weiteren Ausführung der Erfindung ist vorgesehen die im Speicher 7 zwischengespeicherten Datensätze noch vor der Analog-Digitalwandelung des Fernsehsignales in den dann noch vorliegenden digitalen Datenstrom eingefügt werden und das dann vorhandene diigitale Signal in ein Analog-Signal gewandelt wird. Das bedeutet, dass das VPS-Signal digital vor dem Video-DAC eingetastet wird und dann erst eine Umsetzung in ein Analog-Signal erfolgt. Durch diese Ausgestaltung der Erfindung kann die Einfügeeinheit 3 weggelassen werden.

## Patentansprüche

1. Empfänger für Fernsehsignale, die in Form eines digitalen Datenstromes übertragen werden, in welchem digitale Fernsehsignale und digitale Programmvorschausignale enthalten sind,
**dadurch gekennzeichnet, dass**
- er einen Programmvorschausignalseparator (4) aufweist, an dessen Ausgang ein Datengenerator (6) angeschlossen ist,
- der Datengenerator (6) zur Generierung eines einem gewünschten Fernsehprogrammbeitrag zugehörigen Datensatzes vorgesehen ist, welcher aus den Programmvorschausignalen abgeleitet ist und zumindest Informationen über die Anfangs- und die Endzeit des gewünschten Fernsehprogrammbeitrags enthält, und
- der Ausgang des Datengenerators (6) mit einer Einfügeinheit (3) verbunden ist, in welcher der mittels des Datengenerators generierte Datensatz in das dem gewünschten Fernsehprogrammbeitrag entsprechende Fernsehsignal eingesetzt wird.

2. Empfänger nach Anspruch 1,
**dadurch gekennzeichnet, dass**
der Datengenerator (6) ein VPS-Generator ist, der aus den Programmvorschausignalen einen dem VPS-Standard entsprechenden Datensatz generiert.

3. Empfänger nach Anspruch 1 oder 2,
**dadurch gekennzeichnet, dass**
er eine Settop-Box ist.

4. Empfänger nach Anspruch 1 oder 2,
**dadurch gekennzeichnet, dass**
er eine Kabelkopfstation ist.

5. Empfänger nach einem der vorhergehenden Ansprüche,
**dadurch gekennzeichnet, dass**
er einen Digital-Analog-Wandler zur Umsetzung eines aus dem digitalen Datenstrom abgeleiteten digitalen Fernsehsignals in ein analoges Fernsehsignal aufweist und dass die Einfügeinheit (3) zum Einfügen des vom Datengenerator (6) generierten Datensatzes in die Austastlücken des analogen Fernsehsignals vorgesehen ist.

6. Empfänger nach einem der vorhergehenden Ansprüche,
**dadurch gekennzeichnet, dass**
er einen zwischen dem Programmvorschausignalseparator (4) und dem Datengenerator (6) angeordneten ersten Speicher (5) aufweist, der zur Abspeicherung der separierten Programmvorschausignale vorgesehen ist.

7. Empfänger nach einem der vorhergehenden Ansprüche,
**dadurch gekennzeichnet, dass**
er einen zwischen dem Datengenerator (6) und der Einfügeinheit (3) angeordneten zweiten Speicher (7) aufweist, der zur Abspeicherung der vom Datengenerator generierten Signale vorgesehen ist.

8. Empfänger nach einem der vorhergehenden Ansprüche,
**dadurch gekennzeichnet, dass**
die Informationen über die Endzeit der Sendung eine Uhrzeitangabe, eine Information über die Dauer der Sendung oder ein programmbeitragsspezifisches Label ist.
